# EUROPÄISCHE PATENTANMELDUNG

(11) **EP 2 248 419 A1**
(43) Veröffentlichungstag der Anmeldung: **10.11.2010**
(21) Anmeldenummer: 10004695.2
(22) Anmeldetag: 04.05.2010
(51) Int. Cl.: A01M 23/30

(54) **Falle zum Bekämpfen von Schadnagern**

(30) Priorität: 05.05.2009 DE 102009019727
(71) Anmelder: Rattex GmbH, 42697 Solingen (DE)
(72) Erfinder: Bartels, Rainer, 42657 Solingen (DE)
(74) Vertreter: Füssel, Michael

(57) **Zusammenfassung**

Die Erfindung betrifft eine Falle (1) zum Bekämpfen von Schadnagern, umfassend einen allseitig umschlossenen Rohrbehälter (2), zwei an den beiden Enden des Rohrbehälters (2) vorgesehene Eintrittsöffnungen, eine zwischen den Eintrittsöffnungen einsetzbare Bodenplatte (6) und wenigstens zwei schadnagerspezifische Bekämpfungsmittel (5), welche auf der Bodenplatte (6) vorinstalliert sind. Erfindungsgemäß ist vorgesehen, das an den Enden der Seitenwände des Rohrbehälters (2) zusätzlich zu den Eintrittsöffnungen an den Stirnseiten (4) wahlweise öffnungsfähige Eintrittsöffnungen (3') vorgesehen sind und dass der Rohrbehälter (2) zumindest im Bereich der Bekämpfungsmittel (5) ein öffnungsfähiges Deckelteil (18) aufweist. Aus der Erfindung ergibt sich ein Fallensystem, welches flexibel an vorbestimmte Rahmenbedingungen anpassbar ist und mit dem insbesondere schwer bekämpfbare Schädlingspopulationen zuverlässig bekämpft werden können, wobei ein hohes Maß an Bedienbarkeit erreicht wird

## Beschreibung

Die Erfindung betrifft eine Falle zur Bekämpfung von Schadnagern nach Oberbegriff des Anspruchs 1.

Im Stand der Technik sind verschiedene Fallen zur Bekämpfung von Schädlingen bekannt.

Die DE 102 08 138 A1 offenbart eine Falle bestehend im Wesentlichen aus einem allseitig umschlossenen Köderdom, welcher sich zum Bestücken mit Giftködern durch einen Frontdeckel öffnen lässt. Der Köderdom weist zwei seitliche Eintrittsöffnungen auf, welche sich bei freier Durchsicht gegenüber liegen, wodurch eine größere Akzeptanz beim Schädling erreicht werden soll. Der Zugang zum Köderdom erfolgt durch seitlich angebrachte U-förmige Zugänge ohne Boden.

Die DE 10 2004 022 105 A1 offenbart eine Falle auf Basis einer Köderbox, mit mindestens einer seitlichen Eintrittsöffnung angepasst an den zu bekämpfenden Schädling und mit mindestens einer oben liegenden Einfüllöffnung angepasst an eine Befüllung mit Ködergel oder Köderwachsblöcken mit oder ohne Wirkstoff.

Die Patentschrift DE PS 210 616 offenbart eine Falle zum Bekämpfen von Raubtieren bzw. Hygieneschädlingen, bestehend aus einem allseitig umschlossenen Rohrbehälter mit zwei an den beiden Enden des Rohrbehälters vorgesehenen Eintrittsöffnungen, wobei der Rohrbehälter vorbereitet ist zur Aufnahme einer in den Rohrbehälter zwischen die Eintrittsöffnungen einsetzbaren Bodenplatte, auf der zwei Bekämpfungsmittel, von denen jeweils eines einer Eintrittsöffnung zugeordnet ist, vorinstalliert sind.

Die Anforderung beispielsweise an Lebensmittel- oder Pharmabetriebe, ihre Produktionsstätten gegen tierische oder pflanzliche Schädlinge zu sichern, wird zunehmend größer. Bei Festlegung einer Bekämpfungs- und/oder Vorbeugungsstrategie gegen Schädlinge, beispielsweise durch spezialisierte Unternehmen, müssen verschiedene Rahmenbedingungen, zum Beispiel die Einhaltung der Lebensmittelsicherheit, beachtet werden. So treten häufig Situationen auf, in denen beispielsweise aufgrund von Verschleppungsgefahren keine Gifte zum Bekämpfen von Schädlingen zum Einsatz kommen dürfen. Alternativmöglichkeiten bieten hierbei beispielsweise Lebendfallen oder Totschlagfallen. Derartig ausgerichtete Fallensysteme erfordern gegenüber Giftfallen allerdings einen erhöhten Aufwand insbesondere bezüglich der Bestückung, Kontrolle, Scharfstellung und Handhabung.

Hinzu treten immer häufiger schwer bekämpfbare futterresistente und verhaltensveränderte Schädlingspopulationen auf, welche trotz sorgfältiger Aufstellung von bekannten Fallensystemen nicht oder nur unvollständig bekämpft werden können.

Seit ca. 15 Jahren werden in Großstädten Europas Veränderungen bei der Bekämpfung von Hygieneschädlingen aus dem Bereich der Schadnagerpopulationen festgestellt. Besonders betroffen sind beispielsweise Fußgängerzonen mit Lebensmittel verarbeitenden Betrieben.

Grundsätzlich bestehen Gesetze zur Bekämpfung und Beseitigung von Wirbeltieren. Für diese Fälle gilt das Tierschutzgesetz §4 Darin enthalten sind die Forderungen zur schmerzfreien Abtötung nach erforderlichen Notwendigkeiten. Personen die sich mit diesem Thema befassen, müssen eine entsprechende Sachkundeprüfung abgelegt haben. Eine besondere Methode zur Bekämpfung von Schadnagern ohne den Einsatz von Giftködern ist das Wegfangen unter Einsatz von Schlagfallen. Hierzu gehört auch eine sachgemäße Entsorgung der anfallenden Kadaver.

Mit Fallensystemen aus dem Stand der Technik führt der Einsatz unterschiedlichster rodentizider Formulierungen nur noch selten zu den gewünschten Bekämpfungsergebnissen. Schadnager, die in Problemobjekten nach dauerhaften Bekämpfungen nicht vollständig beseitigt wurden, haben sich an die aktuell eingesetzten Ködermethoden durch Verhaltensveränderungen erfolgreich gewöhnt. Der bis dahin wirkungsvolle Einsatz von Cumarinderivaten wird durch die Verweigerung von Nahrung vollständig wirkungslos. Köderstationen nach dem Stand der Technik aus unterschiedlichen Werkstoffen wie Pappe, Kunststoff und ähnlichen Behältnissen werden ebenso vermieden.

Die Schadnager haben gelernt, dass eine Gefahr von Wirkstoffen, Produkten, sowie deren Behältnissen ausgeht ohne die notwendigen Erfahrungen bzw. Erkenntnisse gemacht zu haben. Diese Sensibilisierung wird bis zur perfekten Köderscheu als Schutzfunktion wohl genetisch übertragen. Besonders nachteilig wirkt sich dieses Verhalten beispielsweise dann bei Schließungen von Gewerbebetrieben durch die Ämter für Verbraucherschutz aus. Die Wiederherstellung von Hygiene und die Tilgung eines Befalls kann dann mit herkömmlichen Mitteln kaum oder gar nicht erfolgen. Die Beseitigung von Schadnagern wäre in diesen Fällen nur gesetzeswidrig und unsachgemäß möglich. Die Wiederherstellung eines normalen Betriebsablaufs wäre selbst nach extremen baulichen Veränderungen so kaum zu erreichen.

Die Aufgabe der Erfindung besteht darin, mit einfachen Mitteln ein Fallensystem aufzuzeigen, welches flexibel an vorbestimmte Rahmenbedingungen anpassbar ist und mit dem insbesondere schwer bekämpfbare Schädlingspopulationen zuverlässig bekämpft werden können, wobei ein hohes Maß an Bedienbarkeit erreicht werden soll.

Diese Aufgabe löst die Erfindung mit den Merkmalen des Hauptanspruchs.

Erfindungsgemäß ist vorgesehen, dass zumindest an den Enden der Seitenwände zusätzlich zu den Öffnungen an den Stirnseiten des Rohrbehälters wahlweise öffnungsfähige Eintrittsöffnungen vorgesehen sind und dass der Rohrbehälter zumindest im Bereich der Bekämpfungsmittel ein öffnungsfähiges Deckelteil aufweist. Das Deckelteil kann beispielsweise aufklappbar oder abnehmbar sein. In einer besonderen Ausführungsvariante kann das Deckelteil auch abschließbar ausgeführt sein.

Basierend auf den erfindungsgemäßen Merkmalen kann ein Fallensystem mit variantenreichen Außenansichten geschaffen werden. So können beispielsweise an den Enden des Rohrbehälters jeweils drei wahlweise öffnungsfähige Eintrittsöffnungen vorgesehen sein. Hierdurch kann eine derartige Falle beispielsweise neun unterschiedlich angeordnete Zugangsmöglichkeiten mit entsprechend variantenreichem Aussehen aufweisen. Diese erfindungsgemäßen Variationsmöglichkeiten können insbesondere gegen verhaltensveränderte Schadnagerpopulationen vorteilhaft eingesetzt werden. Derartige Schadnagerpopulationen können durch flexible Anpassung der Außenansichten des erfindungsgemäßen Fallensystems erfolgreich zum Eintritt in die Falle überlistet werden.

Eine erfindungsgemäße Falle eignet sich für den Einsatz von schadnagerspezifischen Bekämpfungsmitteln. Dies können beispielsweise vergiftete Fraßköder, Lebendfallen oder Tötungsvorrichtungen sein.

Aus der Erfindung ergibt sich der Vorteil, dass je nach vorliegender Situation das geeignete Bekämpfungsmittel auf einer entsprechenden Bodenplatte vorinstalliert werden kann. Der Rohrbehälter kann hierbei so zur Aufnahme der Bodenplatte vorbereitet sein, dass je nach vorliegender Situation die Bodenplatte entweder durch die Eintrittsöffnungen oder auch bei abgenommenem bzw. geöffneten Deckelteil durch die sich ergebende Deckelöffnung auf den Behälterboden aufgelegt werden kann.

Durch das öffnungsfähige Deckelteil kann in jedem Fall sichergestellt werden, dass die Bekämpfungsmittel im eingelegten Zustand von außen zugänglich sind. Dies erleichtert insbesondere die Bedienbarkeit der Falle.

So kann beispielsweise die Bodenplatte mit den vorinstallierten Bekämpfungsmitteln durch die Eintrittsöffnungen oder das geöffnete Deckelteil bequem eingeschoben werden, ohne dass die Bekämpfungsmittel, beispielsweise im Falle von Tötungsvorrichtungen, scharf gestellt sein müssen.

Insbesondere bei Tötungsvorrichtungen ergibt sich hierbei ein besonderer Sicherheitsvorteil. Die Scharfstellung der Bekämpfungsmittel kann so erfindungsgemäß bei geöffnetem Deckelteil erfolgen. Weiterhin ergeben sich bei geöffnetem Deckelteil zwischen den Eintrittsöffnungen vorteilhafte Kontroll- und Wartungsmöglichkeiten. Zudem kann beispielsweise gegen unbefugten Zugriff das Deckelteil auch abschließbar ausgeführt sein.

Ein weiterer Vorteil der Erfindung besteht darin, dass je nach Verhaltensart der Schadnager die Lage der geöffneten Eintrittsöffnungen gewählt werden kann. So kann die Falle derart vorbereitet werden, dass auch verhaltensveränderte Schadnagerpopulationen zum Eintritt in eine erfindungsgemäße Falle verleitet werden können. Zudem hat sich gezeigt, dass insbesondere bei seitlichen Öffnungen auch futterresistente Schadnager eher vergiftete Fraßköder akzeptieren als bei anderweitig angeordneten Eintrittsöffnungen. Daher sind in einer bevorzugten Ausführungsvariante auch an den seitlichen Endbereichen des Behälters wahlweise öffnungsfähige Eintrittsöffnungen vorgesehen.

Der Innenraum des Rohrbehälters ist vorzugsweise derart ausgebildet, dass bei eingesetzter und mit Bekämpfungsmitteln bestückter Bodenplatte der jeweilige Schadnager zum Erreichen einer vorbestimmten Zielposition innerhalb des Behälters zumindest den Wirkungsbereich eines Bekämpfungsmittels nicht umgehen kann.

Um den Schadnager zum Erreichen einer Zielposition zu Animieren, können Lockmittel vorgesehen sein, die der Schadnager instinktiv nicht ablehnen kann. Derartige Lockmittel können beispielsweise schmackhaft unvergiftete Fraßköder sein. Da der Schadnager auf seinem Weg zur Zielposition in jedem Fall erfindungsgemäß auf ein Bekämpfungsmittel trifft, können daher also auch Lockmittel verwendet werden, die insbesondere für futterresistente Schadnager ansprechend sind.

Weiterhin können für die Erfindung auch handelsübliche Bekämpfungsmittel situationsbedingt zugekauft werden, so dass der grundlegende Aufbau der Falle besonders einfach aus einem erfindungsgemäßen Rohrbehälter mit zugehöriger erfindungsgemäßer Bodenplatte bestehen kann.

Die öffnungsfähigen Eintrittsöffnungen können beispielsweise durch Klappen oder Schiebeelemente gebildet werden.

In einer bevorzugten Ausführungsvariante werden die wahlweise öffnungsfähigen Eintrittsöffnungen durch Schwächungslinien im Material der Behälterseiten gebildet. Hierdurch können die Eintrittsöffnungen im Bedarfsfall leicht von Hand heraus gebrochen werden.

Um ein unbeabsichtigtes Herausbrechen der Eintrittsöffnungen zu verhindern wird vorgeschlagen, dass entlang der Schwächungslinien Haltepunkte vorgesehen sind.

Weiterhin wird vorgeschlagen, dass die Außenfläche des Behälters Klebestellen aufweist. Ergänzend oder alternativ zu den Klebestellen können auch Perforierungen, beispielsweise für eine sachgerechte Wandinstallation, vorgesehen sein. Eine erfindungsgemäße Falle kann so beispielsweise im Produktionsbereich eines Lebensmittelbetriebes sicher aufgestellt werden. Hierdurch kann die Falle insbesondere auch mitnahmesicher aufgestellt werden.

Um die Falle optimal dimensioniert an die jeweilige Schadnagergröße anzupassen wird vorgeschlagen, dass der Querschnitt des Behälters an die jeweils zu bekämpfende Schadnagerart angepasst ist. Der Querschnitt kann hierbei beispielsweise so ausgelegt sein, dass dem Schadnager ein Unterschlupf mit möglichst allseitiger Berührung der Körperoberfläche geboten wird.

Vorzugsweise wird der Rohrbehälter von einem einstückigen Tunnelrohr gebildet. Der Rohrbehälter kann beispielsweise ein Spritzgussteil aus Kunststoff sein. Alternativ hierzu aber auch aus EPP-Schaum (expandiertes Polypropylen) bestehen. Auch ähnliche Schaumstoffe mit denen beispielsweise eine langlebige Mehrweganwendung, wie dies bei EPP-Schaum der Fall ist, erreicht werden kann, kommen in Frage. Aufgrund seiner guten Umweltverträglichkeit kann EPP-Schaum vorteilhaft auch für erfindungsgemäße Rohrbehälter verwendet werden, welche ggf. als Wegwerfprodukte ausgeführt sind.

Ein aus EPP-Schaum bestehender Rohrbehälter ist beispielsweise dann besonders empfehlenswert, wenn die wahlweise öffnungsfähigen Eintrittsöffnungen durch Schwächungslinien im Material der Behälterseiten gebildet werden.

Ein als Kunststoff-Spritzgussteil ausgeführter Rohrbehälter eignet sich beispielsweise besonders gut für verschließbar ausgeführte Deckelteile.

Ergänzend hierzu wird vorgesehen, dass die Bodenplatte ebenfalls ein Spritzgussteil ist und aus Kunststoff besteht.

Der Rohrbehälter und die Bodenplatte können jeweils mehrteilig zusammengesetzt oder einteilig ausgeführt sein, wobei eine einteilige Bauweise bevorzugt wird.

Die erfindungsgemäße Falle kann so bei geringem Aufwand massenhaft hergestellt werden, wobei die Bekämpfungsmittel bezüglich der vorherrschenden Rahmenbedingungen aus an sich bekannten handelsüblichen Lebendfallen, vergifteten Fraßködern oder Tötungsvorrichtungen individuell zusammengestellt werden können.

In einer bevorzugten Ausführungsvariante sind jeweils zwei Bekämpfungsmittel gegenüberliegend angeordnet. Dies hat den Vorteil, dass sich in dem Rohrbehälter zwischen den gegenüberliegend angeordneten Bekämpfungsmitteln eine vorbestimmte Zielposition des Schadnagers befinden kann. Da sich die Bekämpfungsmittel erfindungsgemäß zwischen den wahlweise öffnungsfähigen Eintrittsöffnungen befinden, wird der Schadnager zum Erreichen der Zielposition zwangsläufig wenigstens einen Wirkungsbereich eines Bekämpfungsmittels betreten müssen.

Um den Schadnager zum Erreichen der Zielposition zu Animieren wird vorgeschlagen, dass an der vorbestimmten Zielposition Fressköder vorgesehen sind. Hierbei können die Fressköder, wie bereits oben erwähnt, so ausgelegt sein, dass auch futterresistente Schadnager angesprochen werden. Ergänzend hierzu können die Fressköder je nach Anwendungsfall aber auch wenigstens einen schadnagerspezifischen toxischen Wirkstoff enthalten.

Insbesondere bei der Verwendung von Fressködern mit toxischen Wirkstoffen wird vorgeschlagen, dass die Bodenplatte an ihrer Oberseite im mittleren Längsbereich einen trogartigen Aufsatz aufweist. Der trogartige Aufsatz kann so als Zielposition dienen und den Fressköder sicher aufnehmen ohne dass die Gefahr besteht, dass Fressköder aus dem Rohrbehälter unbeabsichtigt heraustreten können.

Für eine sichere Befestigung der Bekämpfungsmittel auf der Bodenplatte wird vorgeschlagen, dass die Bodenplatte an ihrer Oberseite Befestigungsvorrichtungen für die Bekämpfungsmittel aufweist. Die Befestigungsvorrichtungen können sowohl Bestandteil einer mehrteiligen als auch einteiligen Bodenplatte sein. Die Bekämpfungsmittel können so vorteilhaft reversibel auf die Bodenplatte aufgebracht werden. Je nach vorbestimmten Rahmenbedingungen können so entsprechende Bekämpfungsmittel leicht von Hand auf- bzw. abmontiert werden.

In einer bevorzugten Ausführungsvariante sind Klipps als Befestigungsvorrichtungen vorgesehen. Insbesondere Klipps lassen sich bei einer einteiligen Bodenplatte besonders leicht realisieren. Als Befestigungsvorrichtungen kommen weiterhin Verschraubungen, Klemmen oder ähnliches in Frage.

Darüberhinaus können die Befestigungsvorrichtungen auch für eine Aufnahme von Bekämpfungsmitteln von unterschiedlicher Art und/ oder Größe ausgelegt sein.

Weiterhin wird vorgeschlagen, dass bei einer in Gebrauch befindlichen Falle die Laufebene der Bodenplatte gegenüber dem Erdboden, auf dem der Rohrbehälter aufgestellt wurde hoch gesetzt ist. Das hat den Vorteil, dass der Kontakt der Bekämpfungsmittel beispielsweise mit Brackwasser sicher vermieden werden kann.

Vorzugsweise sind als Bekämpfungsmittel Totschlagfallen vorgesehen. Handelsübliche Totschlagfallen bieten bei vergleichsweise geringem Aufwand eine zuverlässige Wirkung gegen Schadnager, insbesondere in Verbindung mit der vorliegenden Erfindung.

Bezüglich der erfindungsgemäßen Merkmale wird weiterhin vorgeschlagen, dass die Totschlagfallen einen Totschlagbügel und einen separaten Spannbügel aufweisen. Die sich auf der Bodenplatte im Gebrauchszustand der Falle befindlichen Totschlagfallen können so bei abgenommenen Deckelteil bequem von oben gespannt werden, ohne dass beim Spannvorgang der Totschlagbügel berührt werden muss.

Bezüglich der Bodenplatte steht der Totschlagbügel im gespannten Zustand senkrecht auf dieser und beim Entspannen schlägt der Totschlagbügel in Richtung der Bodenplatte aus.

Im Hinblick auf die Funktionsweise derartiger Totschlagfallen wird vorgeschlagen, dass der Abstand zumindest im Bereich der Bekämpfungsmittel zwischen dem senkrecht stehenden Totschlagbügel und der Rohrbehälterdecke, bzw. der Innenfläche des Deckelteils, so gewählt ist, dass der Totschlagbügel und gegebenenfalls der Spannbügel bezüglich der Rohrbehälterdecke berührungslos ausschlagen können.

Für eine optimale Dimensionierung des Rohrbehälters wird vorgeschlagen, dass die Breite des Bekämpfungsmittels dem inneren Abstand der Seitenwände des Rohrbehälters entspricht. Ergänzend hierzu wird weiterhin vorgeschlagen, dass die Breite der Bodenplatte dem inneren Abstand der Seitenwände des Rohrbehälters entspricht.

Um die Akzeptanz beim Schadnager weiterhin zu erhöhen wird vorgeschlagen, dass der Innenraum des Rohrbehälters geschwärzt ist.

Mit der erfindungsgemäßen Falle lassen sich nun insbesondere futterresistente und verhaltensveränderte Schadnagerpopulationen bekämpfen. Weiterhin können mit einer erfindungsgemäßen Falle Vorgaben nach dem Tierschutzgesetz eingehalten werden, insbesondere eine schmerzfreie Tötung und eine sachgemäße Entsorgung der Kadaver. Selbst die Wiederherstellung von Hygiene und die Tilgung eines Befalls von stillgelegten Gewerbebetrieben kann mit einer erfindungsgemäßen Falle gesetzeskonform und sachgemäß erfolgen.

Im Folgenden wird die Erfindung anhand von Ausführungsbeispielen näher erläutert.

Es zeigen:
- Fig.1: eine erfindungsgemäße Falle im Vollschnitt
- Fig.2: eine dreidimensionale Ansicht einer erfin- dungsgemäßen Falle
- Fig.3: eine Totschlagfalle mit separatem Spann- bügel in Seitenansicht
- Fig.4: eine Totschlagfalle gemäß Fig.3 in Vorder- ansicht im ungespannten Zustand,
- Fig.5: eine erfindungsgemäße Bodenplatte
- Fig.5a: ein weiteres Ausführungsbeispiel der Erfindung in Teilansicht,
- Fig.5b: das Ausführungsbeispiel gem. Fig.5a in Ansicht von oben,
- Fig.5c: ein Ausführungsbeispiel der Erfindung mit winkliger Anordnung
- Fig.6: ein weiteres Ausführungsbeispiel der Er- findung mit lediglich einer Seitenwand,
- Fig.6a: Detailansicht VIa des Ausführungsbeispiels Fig.5b,
- Fig.7: ein weiters Ausführungsbeispiel der Erfindung mit Klappdeckeln,
- Fig.7a: das Ausführungsbeispiel gem. Fig.7 in Ansicht von oben

Sofern im Folgenden nichts anderes gesagt ist, gilt die folgende Beschreibung stets für alle Figuren.

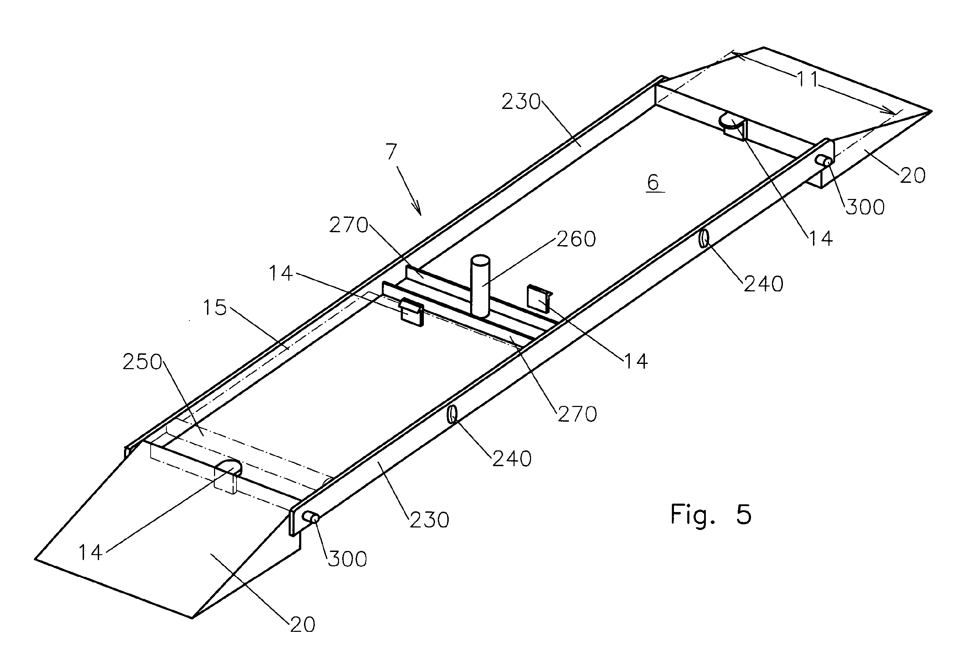

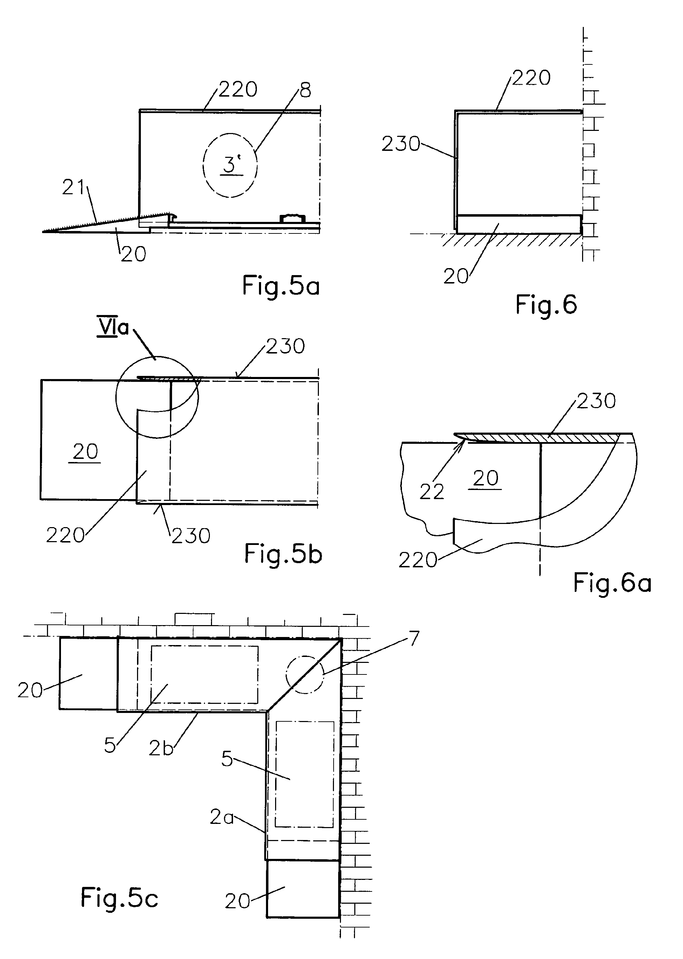

Die Figuren zeigen eine erfindungsgemäße Falle 1 zum Bekämpfen von Schadnagern. Die Falle 1 besteht aus einem in Längsrichtung allseitig umschlossenen Rohrbehälter 2 mit wenigstens zwei an den beiden Enden des Rohrbehälters 2 vorgesehenen Eintrittsöffnungen 3. Die Eintrittsöffnungen 3 sind angepasst an die jeweils zu bekämpfende Schadnagerart und mit Ausnahme des Ausführungsbeispiels Fig.5 c ist zumindest ein Paar der Eintrittsöffnungen 3 bei freier Durchsicht gegenüber liegend angeordnet.

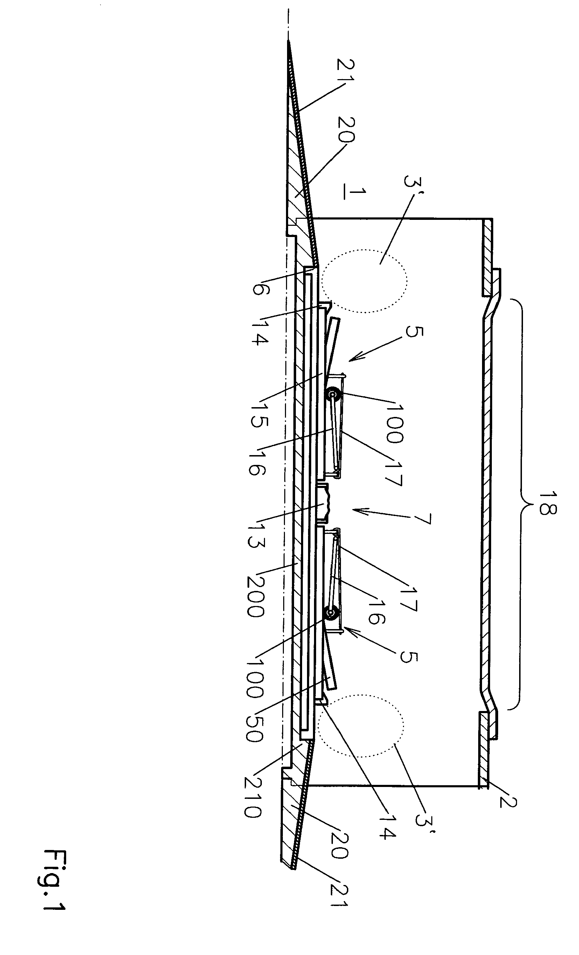

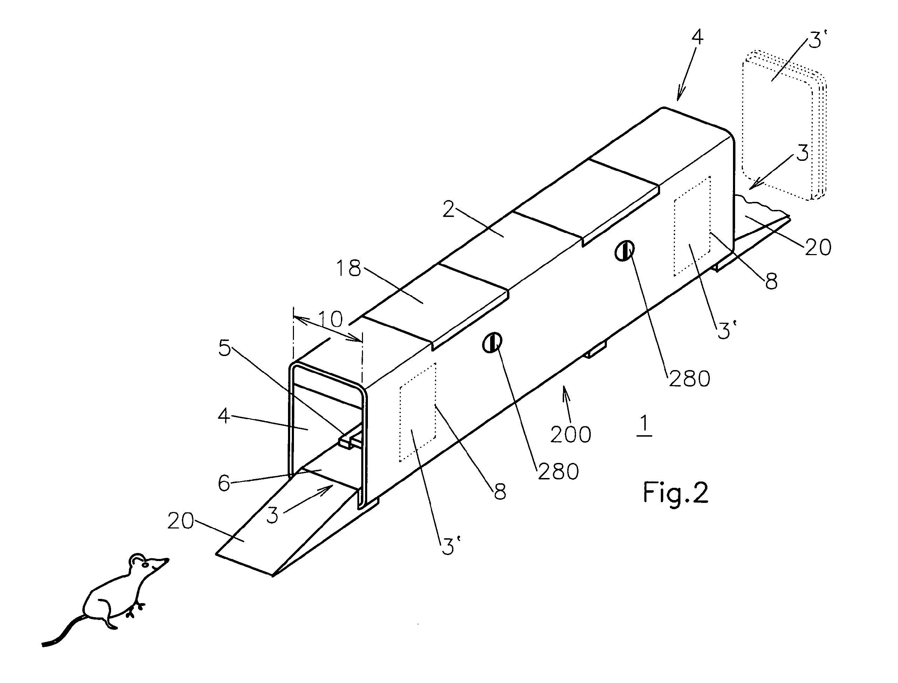

Der Rohrbehälter 2 ist zur Aufnahme einer zwischen die Eintrittsöffnungen 3 einsetzbaren Bodenplatte 6 vorbereitet. In den Ausführungsbeispielen gem. Fig.1 und Fig.2 wird die Bodenplatte 6 auf die untere Wandung des allseits geschlossenen Rohrbehälters 2 gelegt.

Im Ausführungsbeispiel gem. Figuren 5 bis 7a ist die Bodenplatte 6 selbst Bestandteil der unteren Wandung des Rohrbehälters 2, so dass die Bodenplatte zusammen mit den Seitenwänden und der Deckfläche des Deckels 18 den Rohrbehälter selbst ergibt.

Wie insbesondere anhand der Detaildarstellung von Fig.1 erkennbar wird, kann die Bodenplatte 6 ihrerseits auf einer ein- oder mehrstückig ausgestalteten Basisplatte 200 angeordnet werden.

Wesentlich ist, dass auf der Bodenplatte 6 zwei schadnagerspezifische Bekämpfungsmittel 5, von denen jeweils eines einer Eintrittsöffnung 3 zugeordnet ist, vorinstalliert sind.

Dabei liegt die Bodenplatte 6, wie insbesondere Fig.1 zeigt, mit ihrer Oberseite, auf der auch die Bekämpfungsmittel 5 angeordnet sind, praktisch fugenlos an den Rampen 20, welche unter sanftem Anstieg die Höhendifferenz zwischen dem Erdboden und der Oberseite der Bodenplatte 6 überwinden.

Dieser sanfte Anstieg ist in jedem Falle vorgesehen, also auch für den Fall, dass entsprechend Fig,5 die Bodenplatte 6 ihrerseits Bestandteil der unteren Wandung des Rohrbehälters 2 wird.

Durch den sanften Anstieg der Rampen 20 bis auf Höhe der Oberseite der Bodenplatte 6 wird für jeden Schadnager ein Zugangsweg geschaffen, der frei ist von quer verlaufenden Kanten, Stufen etc., so dass ein im wesentlichen glatter Zugangsweg entsteht, der auch noch mit einem Samt- oder Beflockungsbelag 21 ausstaffiert sein kann.

Grundsätzlich gilt hier, dass ein möglichst glatter Zugangsweg jeden Schadnager auch motiviert, die Falle 1 zu betreten.

Wesentlich ist, dass an den Enden der Seitenwände 230, die auch von einem rundzylindrischen Rohrbehälter 2 stammen können, zusätzlich zu den Eintrittsöffnungen 3, die an den Stirnseiten 4 des Rohrbehälters 2 vorgesehen sind, wahlweise öffnungsfähige Eintrittsöffnungen 3' vorgesehen sind und dass der Rohrbehälter 2 zumindest im Bereich der Bekämpfungsmittel 5 ein öffnungsfähiges Deckelteil 18 aufweist.

In einer Weiterbildung der Erfindung sind auch die an den Stirnseiten 4 des Rohrbehälters 2 vorgesehenen Eintrittsöffnungen 3 wahlweise öffnungsfähig.

Das öffnungsfähige Deckelteil 18 kann beispielsweise aufklappbar oder abnehmbar ausgeführt sein. In den gezeigten Ausführungsbeispielen ist das Deckelteil 18 abnehmbar ausgeführt. Weiterhin sind insbesondere die in Fig 2 dargestellten Deckelteile 18 mittels Absperrvorrichtungen 280 abschließbar.

Die oben beschriebenen Eintrittsöffnungen 3, die an den Stirnseiten 4 vorgesehen sind, werden in den gezeigten Ausführungsbeispielen als wahlweise öffnungsfähige Eintrittsöffnungen 4 ausgeführt.

Aus der Erfindung ergibt sich der Vorteil, dass je nach vorliegender Gesetzeslage, bzw. je nach vorliegendem Ergebnis einer sachkundigen Prüfung, die Falle 1 entsprechend vorbereitet und verwendet werden kann. So kann je nach vorliegender Situation das jeweils geeignete Bekämpfungsmittel 5 auf einer entsprechenden Bodenplatte 6 vorinstalliert werden und zusammen mit der Bodenplatte 6 in einfachster Weise in den Rohrbehälter 2 eingelegt werden.

Der Rohrbehälter 2 kann beispielsweise an seinem linken Ende drei und an seinem rechten Ende vier wahlweise öffnungsfähige Zugangsöffnungen 3' aufweisen. In den gezeigten Beispielen weist der Rohrbehälter 2 an seinen Enden jeweils zwei Zugangsöffnungen 3, 3' auf. Wesentlich hierbei ist, dass durch die Anzahl der wahlweise öffnungsfähigen Zugangsöffnungen 3' die Variationsmöglichkeiten der Außenansichten des Rohrbehälters bestimmt werden. Je nachdem, welche Zugangsöffnungen 3' gerade zu oder auf sind, wird dem Rohrbehälter ein anderes Erscheinungsbild gegeben. Erfindungsgemäß wird so ein flexibel anpassbares und variantenreiches Aussehen des Rohrbehälters ermöglicht, so dass insbesondere verhaltensveränderte Schadnagerpopulationen zum Eintritt in den Rohrbehälter 2 überlistet werden können.

Zusätzlich kann der Rohrbehälter mit einem äußeren Kunststoffgitter getarnt werden, so dass dieser beispielsweise die äußere Form eines Radiators annimmt.

Insbesondere Fig.1 zeigt eine Falle 1, in der die Bodenplatte 6 entweder durch Öffnen der wahlweise öffnungsfähigen stirnseitigen Eintrittsöffnungen 3' oder durch Öffnen des entsprechend dimensionierten Deckelteils 18 auf die Basisplatte 200 des Rohrbehälters 2 aufgelegt werden kann.

Insbesondere Fig.2 zeigt ein Ausführungsbeispiel der Erfindung, in der die Bodenplatte 6 durch die stirnseitigen Eintrittsöffnungen 3 in den Rohrbehälter 2 eingeschoben werden kann.

Mit besonderem Vorteil ist erfindungsgemäß in jedem der oben aufgeführten Fälle sichergestellt, dass durch das öffnungsfähige Deckelteil 18 die Bekämpfungsmittel 5 im eingelegten Zustand von außen zugänglich sind. Dies erleichtert insbesondere die Bedienbarkeit und Wartung der Falle 1. Durch die in Fig. 2 dargestellten und mittels der Absperrvorrichtungen 280 abschließbaren Deckelteile 18 können insbesondere die Bekämpfungsmittel 5 gegen unbefugten Zugriff gesichert werden.

Ein weiterer Vorteil der Erfindung besteht darin, dass die Wahl der zu öffnenden Eintrittsöffnungen 3' vom jeweiligen Verhalten der Schadnager ausgehen kann. Demnach kann eine sachkundige Person die Falle 1 entsprechend vorbereiten und ggf. die so vorbereitete Falle 1 auch angelernten Personen unter Anweisung zum Gebrauch übergeben.

Insbesondere aus den Fig.1 und 2 sowie 7 ist zu erkennen, dass auch an den seitlichen Endbereichen des Behälters 2 wahlweise öffnungsfähige Eintrittsöffnungen 3' vorgesehen sind. Die Bekämpfungsmittel 5 sind jeweils zwischen den Eintrittsöffnungen 3' angeordnet. Ergänzend hierzu ist der Innenraum des Rohrbehälters zumindest zwischen diesen Eintrittsöffnungen 3' derart ausgebildet, dass bei eingesetzter und mit Bekämpfungsmitteln 5 bestückter Bodenplatte 6 der jeweilige Schadnager zum Erreichen einer vorbestimmten Zielposition 7 innerhalb des Zentralbereiches des Rohrbehälters 2 zumindest den Wirkungsbereich eines Bekämpfungsmittels 5 nicht umgehen kann.

In den vorliegenden Ausführungsbeispielen ist an der Zielposition 7 innerhalb des Zentralbereichs des Rohrbehälters 2 ein z.B. ungiftiger Fressköder ausgelegt. Dies hat den Vorteil, dass insbesondere futterresistente Schadnager zum Betreten des Rohrbehälters 2 verleitet werden können. Je nach Anwendungsfall kann es aber auch vorteilhaft sein, wenn die Fressköder wenigstens einen schadnagerspezifischen toxischen Wirkstoff enthalten.

Die wahlweise öffnungsfähigen Eintrittsöffnungen 3' werden durch Schwächungslinien 8 im Material der Behälterseiten gebildet. Dies hat den Vorteil, dass die Eintrittsöffnungen 3' von Hand durch Eindrücken leichtgängig herausgebrochen werden können.

Ergänzend hierzu können auch andere Schließmechanismen, insbesondere reversible, für die wahlweise öffnungsfähigen Eintrittsöffnungen 3' verwendet werden.

Um ein unbeabsichtigtes Herausbrechen der wahlweise öffnungsfähigen Eintrittsöffnungen 3' zu verhindern, können entlang der Schwächungslinien 8 Haltepunkte vorgesehen sein.

Weiterhin kann vorgesehen sein, dass die Außenfläche des Rohrbehälters 2 Klebestellen aufweist. Zusätzlich oder auch alternativ können Perforierungen, beispielsweise für eine sachgerechte Wand- oder Bodeninstallation, vorgesehen sein.

Durch derartig vorgeschlagene Maßnahmen kann die erfindungsgemäße Falle 1 beispielsweise mitnahmesicher und ortsfest aufgestellt werden.

Insbesondere Fig.2 zeigt, dass der Querschnitt des Rohrbehälters 2 an die jeweils zu bekämpfende Schadnagerart angepasst ist. In den gezeigten Ausführungsbeispielen wird dies dadurch erreicht, dass dem Schadnager eine möglichst allseitige Berührung der Körperoberfläche geboten wird.

Diese Maßnahme beruht auf der Tatsache, dass ein Schadnager stets bestrebt ist, Wandkontakt zu halten.

Die insoweit als Sinnesorgane wirkenden Barthaare signalisieren dem Schadnager, dass er, entsprechenden Wandkontakt vorausgesetzt, von rechts und/oder links keine natürlichen Feinde zu erwarten hat.

Hat der Schadnager zudem Kontakt zur oben liegenden Innenfläche der Falle 1, erwartet er instinktiv auch keinen Angriff von oben und fühlt sich sicher.

Die Erfindung geht deshalb davon aus, dass neben dem angestrebten durchgängig glatten Zugangsweg in die Falle 1 auch nach Möglichkeit ein möglichst glatter und übergangsfreier Wandkontakt zwischen den Barthaaren des Schadnagers und der Innenwand der Falle 1 stattfinden soll.

Zu diesem Zweck weist die Falle, entsprechend Fig.5b und 6a eine leicht trichterförmig gestaltete Einlauföffnung auf, die sich nach Art eines Trichters 22 konisch in Richtung zur Falle 1 verjüngt.

Auf diese Weise ist sichergestellt, dass ein Schadnager den Kontakt mit den Barthaaren beim Zutritt in die Falle 1 nicht verliert und auf diese Weise verleitet wird, die Falle 1 zu betreten.

Weiterhin wird der Rohrbehälter 2 in den Ausführungsbeispielen der Fig.1 und Fig.2 von einem einstückigen Tunnelrohr gebildet.

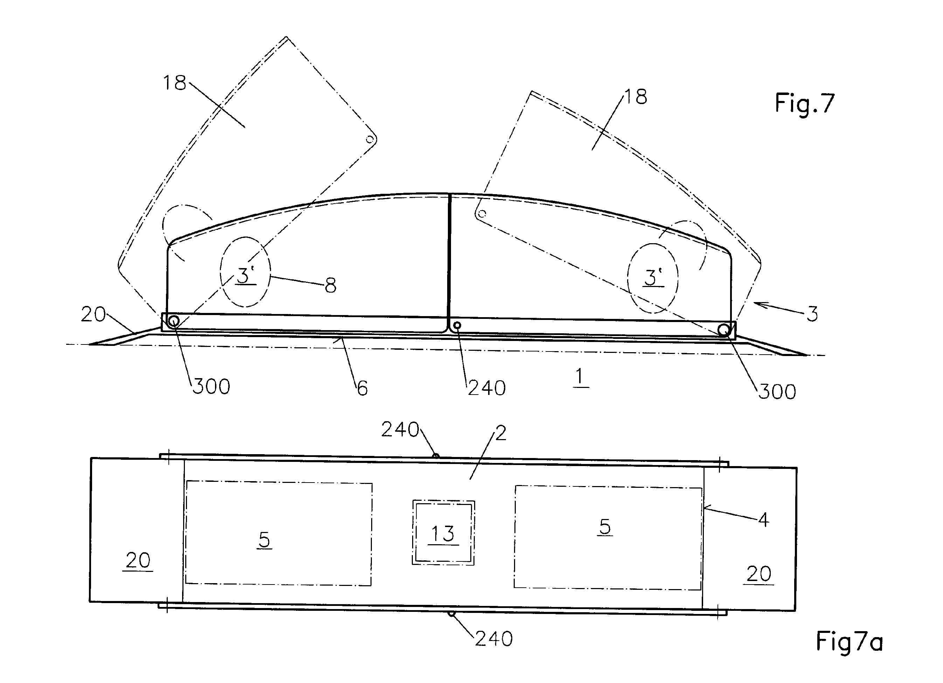

Abweichend hiervon zeigen insbesondere die Figuren 5 und 7 Weiterbildungen der Erfindung, bei denen das Tunnelrohr aus einzelnen Bauteilen zusammengesetzt ist.

Dabei kommt insbesondere der Bodenplatte 6, wie in Fig.5 gezeigt besondere Bedeutung zu.

Diese Bodenplatte 6 ist unmittelbar so gestaltet, dass sie erhöht über dem Fußboden angeordnet ist, so dass die Falle 1 auch im Nassbereich nicht absaufen kann.

Hierzu dienen auch die endseitig angeordneten Rampen 20, da auf diese Weise den Schadnagern der Zutritt in die Falle 1 erleichtert wird.

Die jeweiligen Totschlagfallen werden über die endseitig vorgesehenen Befestigungsvorrichtungen 14 mit der Bodenplatte 6 verbunden, wobei die Laufebene, auf welcher die Schadnager die Falle 1 durchqueren sollen, durch entsprechende Basisplatten der Bekämpfungsmittel 5 entsprechend Fig.1 gebildet wird.

Auch hierdurch ist sichergestellt, dass ein möglichst hindernisfreier glatter Weg durch die Falle führt, so dass diese auch gern von den Schadnagern angenommen wird.

Dabei kann über einen separat angeordneten Dorn 260 oder eine ähnliche Aufnahmevorrichtung eine Köderbefestigungsvorrichtung an der Bodenplatte 6 befestigt werden, die auch genauso leicht wieder entnommen werden kann, um sie z.B. neu zu befüllen.

Die seitlichen Nocken 240 bieten darüber hinaus die Möglichkeit, die U-förmig gestalteten Deckelteile 18 einseitig zu verrasten, so dass die Falle 1 auch nicht willkürlich geöffnet werden kann.

Wie insbesondere Fig.7 hierzu zeigt, weisen die Deckelteile 18 an den entsprechenden Stellen zum Querschnitt der Nocken 240 korrespondierende Öffnungen auf, so dass die Öffnungen unter geringer Vorspannung über die Nocken 240 gestülpt werden können. Dabei ist leicht vorstellbar, dass die Deckelteile 18 entsprechend Fig.7 mit einem U-förmigen Querschnitt ausgestaltet sind und stirnseitig über entsprechende Scharnieranschlüsse 300 mit der Bodenplatte 6 verbunden werden.

In allen Figuren wird nachvollziehbar gezeigt, dass die Tunnelform des Rohrbehälters 2 so gewählt ist, dass dieser Tunnel aufgrund des Aufbaus nicht als Hindernis vom Schadnager erkannt wird, so dass auch verhaltensveränderte Schadnagerpopulationen zum Eintritt in eine erfindungsgemäße Falle 1 verleitet werden können.

In den gezeigten Ausführungsbeispielen ist der Rohrbehälter 2 ein Spritzgussteil und besteht aus Kunststoff. Alternativ hierzu kommt auch EPP-Schaum als Material für den Rohrbehälter 2 in betracht. Hierbei sind auch weitere Materialien für den Rohrbehälter 2 denkbar, beispielsweise Materialien mit wärmedämmenden Eigenschaften, um dem Schadnager einen sicheren Unterschlupf vorzutäuschen.

Der als Kunststoff-Spritzgussteil ausgeführte Rohrbehälter 2 eignet sich beispielsweise besonders gut für eine sichere Anbringung der Absperrvorrichtungen 280.

Ergänzend hierzu besteht die Bodenplatte 6 ebenfalls aus Kunststoff und ist ein Spritzgussteil.

Der Rohrbehälter 2 und die Bodenplatte 6 können sowohl einstückig als auch mehrstückig zusammengesetzt sein.

Insbesondere in Fig.1 wird dargestellt, dass jeweils zwei Bekämpfungsmittel 5 gegenüberliegend angeordnet sind. In dem vorliegenden Ausführungsbeispiel sind die Bekämpfungsmittel 5 Totschlagfallen 15, welche sich spiegelbildlich gegenüberliegen. Zwischen den gegenüberliegend angeordneten Bekämpfungsmitteln 5 bzw. den Totschlagfallen 15 befindet sich eine Zielposition 7 des Schadnagers, an der Fressköder ausgelegt sind.

Die Bodenplatte 6 weist an ihrer Oberseite im mittleren Längsbereich einen trogartigen Aufsatz 13 auf, in dem der Fressköder sicher aufbewahrt werden kann. Ergänzend hierzu ist auch eine Mulde oder eine ähnliche Konstruktion für eine sichere Aufbewahrung des Fressköders vorstellbar.

Die Bodenplatte 6 weist an ihrer Oberseite Befestigungsvorrichtungen 14 für die Bekämpfungsmittel 5 auf. In den vorliegenden Ausführungsbeispielen sind Klipps als Befestigungsvorrichtungen 14 vorgesehen. Ergänzend hierzu kommen auch andere reversible Befestigungsvorrichtungen für die Bekämpfungsmittel 5 in Frage, wie z.B. Verschraubungen, Klemmen oder Ähnliches. Weiterhin können die Befestigungsvorrichtungen 14 auch zur Aufnahme von voneinander verschiedenen Bekämpfungsmitteln 5, beispielsweise in verstellbarer Weise, ausgelegt sein.

Weiterhin zeigt insbesondere Fig.1, dass die Bodenplatte 6 bei einer im Gebrauch befindlichen Falle 1 gegenüber dem Boden 12 des Rohrbehälters 2 hochgesetzt ist. Weiterhin ist die Bodenplatte 6 durch Nocken 210 lagefixiert. Ergänzend hierzu ist auch denkbar, dass die Bodenplatte 6 mit reversiblen Befestigungsvorrichtungen beispielsweise fest mit der Basisplatte 200 des Rohrbehälters 2 verbunden ist, um eine unsachgemäße Entnahme der Bodenplatte 6 zu verhindern. Zusätzlich kann auch hier ein abschließbarer Verriegelungsmechanismus vorgesehen sein.

Mit der in Fig.1 gezeigten Lagefixierung wird zudem sichergestellt, dass die Bekämpfungsmittel 5 im Gebrauchszustand der Falle 1 im Bereich ihres jeweiligen zugeordneten Deckelteils 18 angeordnet sind.

Erfindungswesentlich ist hierbei, dass die Bekämpfungsmittel 5 im Bereich ihres jeweils zugeordneten Deckelteils 18 angeordnet werden, so dass diese im Gebrauchszustand jederzeit von außen zugänglich sind. Die Bekämpfungsmittel 5, in den vorliegenden Beispielen als Totschlagfallen 15 ausgeführt, werden mit der Bodenplatte 6 mittels der Befestigungsvorrichtung 14 fest verbunden. Bei den Ausführungsbeispielen der Fig.1 und 5 kann die Bodenplatte 6 mit den aufmontierten Totschlagfallen 15 durch die stirnseitigen Eintrittsöffnungen 3 in den Rohrbehälter 2 eingeschoben und auf die Basisplatte 200 des Rohrbehälters 2 lagefixiert aufgesetzt werden.

Bei den Ausführungsbeispielen gem. Fig.5 und 7 wird die Falle 1 aus den einzelnen Bestandteilen Bodenplatte-Deckelteile-Totschlagfallen auf einfache Weise bedarfsgerecht zusammengesetzt.

Dabei können sowohl die stirnseitigen Eintrittsöffnungen 3 als auch die seitlichen Eintrittsöffnungen 3' bedarfsweise herausgebrochen werden. Zusätzlich muss in allen Fällen allerdings dann auch der Köder an der Zielposition 7 angebracht werden, um die Falle 1 dann anschließend ortsfest installieren zu können.

Ein Scharfstellen der Totschlagfallen 15 kann erfindungsgemäß bequem bei geöffneten Deckelteilen 18 erfolgen. Von besonderem Vorteil ist hierbei, dass die Totschlagfallen 15 daher nicht im scharf gestellten Zustand transportiert werden müssen, so dass sich erfindungsgemäß ein besonderer Sicherheitsvorteil ergibt.

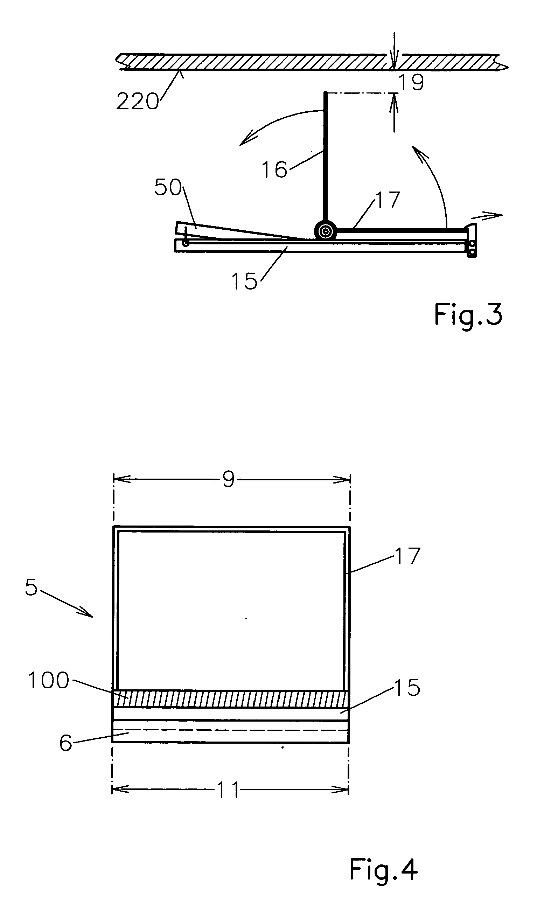

Insbesondere die Fig.3 und 4 zeigen eine Totschlagfalle 15 mit einem Totschlagbügel 16 und einem separaten Spannbügel 17. Die Totschlagfalle 15 wird hierbei durch Bewegen des Spannbügels 17 mittels der Feder 100 gespannt, so dass eine Berührung des Totschlagbügels 16 vermieden werden kann.

Insbesondere Fig.3 zeigt, dass der Totschlagbügel 16 bezüglich der Bodenplatte 6 im gespannten Zustand senkrecht steht. Der gespannte Zustand wird durch Halten des Spannbügels 17 aufrecht gehalten. Sobald das Trittbrett 50 der Totschlagfalle 15 betätigt wird, löst sich der Spannbügel 17 aus seiner Halterung und der Totschlagbügel 16 schlägt in Richtung der Bodenplatte 6 aus.

Vorzugsweise ist der minimale Abstand 19 zwischen dem senkrecht stehenden Totschlagbügel 16 und der Behälterdecke 220 so gewählt, dass der Totschlagbügel 16 und ggf. auch der Spannbügel 17 bezüglich der Behälterdecke 220 berührungslos ausschlagen kann.

Für eine optimale Gestaltung der Falle 1 bezüglich ihrer Dimensionierung ist hierbei vorgesehen, dass die Breite 9 des Bekämpfungsmittels 5 dem inneren Abstand 10 der Seitenwände des Rohrbehälters 2 entspricht. Ergänzend hierzu ist weiterhin vorgesehen, dass die Breite 11 der Bodenplatte 6 dem inneren Abstand 10 der Seitenwände des Rohrbehälters 2 entspricht.

Mit den gezeigten Ausführungsbeispielen wird deutlich gemacht, dass mit dem erfindungsgemäßen Fallensystem eine schnelle und schmerzfreie Abtötung von Schadnagern erfolgen kann. Dabei kann eine erfindungsgemäße Falle 1 so ausgelegt werden, dass weder die Gefahr von Verletzungen besteht noch ein unsachgemäßes Umherschleppen der Falle 1 möglich ist. Aufgrund der röhrenartigen Ausbildung der Falle 1 wird diese vom Schadnager nicht als Hindernis erkannt. Die bei Schadnagern oft beobachtete Angst vor neuen Dingen entsteht auf diese Weise erst gar nicht. Erworbene Schutzfunktionen treten außer Kraft.

Die Bodenplatte 6, welche auch den Köder trägt, besteht in den gezeigten Ausführungsbeispielen aus einem einstückigen Spritzgussteil. Durch spezielle Halterungen kann die Bodenplatte 6 mit dem Innenraum des Rohrbehälters 2 fest verbunden werden, wobei dennoch jederzeit die Bodenplatte 6 ausgewechselt bzw. gereinigt oder erneuert werden kann.

In Figur 5 wird eine erfindungsgemäße Bodenplatte 6 dargestellt. Die Bodenplatte 6 weist zwei senkrecht zur Ebene der Bodenplatte 6 stehende Seitenwände 230 auf, welche um die Breite 11 der Bodenplatte 6 voneinander beabstandet sind. Die Seitenwände 230 können biegsam sein und weisen nach außen hervorstehende Nocken 240 auf, welche die Breite 11 der Bodenplatte 6 um dass Maß ihrer jeweiligen Höhen vergrößern. Durch die Seitenwände 230 kann die Bodenplatte 6 beim Einführen in einen erfindungsgemäßen Rohrbehälter 2 vorteilhaft geführt werden und im Gebrauchszustand eine stabilisierende Wirkung auf den Rohrbehälter entfalten.

Weiterhin können sich die Seitenwände 230 durch die Nocken 240 im Gebrauchszustand leicht nach innen biegen, so dass die Bodenplatte 6 im Rohrbehälter 2 vorteilhaft im Klemmsitz gehalten werden kann.

Die in Figur 5 dargestellte Bodenplatte 6 weist einen senkrecht zur Ebene der Bodenplatte 6 stehenden Dorn 260 auf, welcher im Bereich der Zielposition 7 angeordnet ist. Rechts und links vom Dorn 260 sind zwei sich gegenüberliegende Querleisten 270 angeordnet, so dass der Bereich der Zielposition 7 eingegrenzt werden kann. Auf den Dorn 260 kann beispielsweise ein Fraßköder positionssicher aufgesteckt werden.

Weiterhin wird in Figur 5 gezeigt, dass auf der Bodenplatte 6 mittels der klammerartigen Befestigungsvorrichtungen 14 beispielsweise Totschlagfallen 15 sicher gehalten werden können. Für die Totschlagfallen 15 wurde hierbei eine vereinfachte Darstellung gewählt, welche sich auf die Grundplatte der Totschlagfallen 15 beschränkt. Auf die Grundplatte sind Dichtleisten 250 aufgebracht, die beispielsweise nachträglich durch Aufkleben angebracht werden können. Die Dichtleisten 250 können derart positioniert werden, dass sie im Gebrauchszustand hinter den Eintrittsöffnungen 3 liegen, so dass beispielsweise verhindert werden kann, dass auf der Bodenplatte 6 befindliche Flüssigkeiten aus dem im Gebrauch befindlichen Rohrbehälter 2 austreten.

Weiterhin können die Oberflächen an den Einlaufwegen porös gestaltet sein, so dass Urinmarkierungen besser haften können. Durch diese Maßnahme können die Fangergebnisse noch weiter verbessert werden.

Bei den in den dargestellten Ausführungsbeispielen verwendeten Bekämpfungsmitteln 5 handelt es sich um handelsübliche Totschlagfallen 15. Die Befestigungen bzw. ggf. Vertiefungen auf der Oberseite der Bodenplatte 6 sind vorzugsweise so konstruiert, dass die meisten gängigen Holz- oder Kunststofffallen hineinpassen.

Vorzugsweise sind die Totschlagfallen 15 spiegelverkehrt gegenseitig gegenüberliegend mit einem giftfreien Köderlockstoff zwischen den jeweils geöffneten Eintrittsöffnungen 3' positioniert und somit in Laufrichtung zu beiden Seiten hin aufgestellt. Durch die Haltevorrichtungen 14 können die Totschlagfallen 15 problemlos durch Aufdrücken befestigt und im eingelegten Zustand scharf gestellt werden. Ein zwischen den Fallen konstruierter trogartiger Aufsatz kann herkömmliche Köderformulierungen z.B. als Wachsköderblock mit Wirkstoffen aus der Familie der Cumarinderivate aufnehmen.

Das oben beschriebene Fallensystem kann einzeln oder komplett aus unterschiedlichen Werkstoffen hergestellt werden. Vorzugsweise ist die Falle 1 aus einstückigen Kunststoffspritzgussteilen hergestellt.

Die Platzierung der Falle 1 kann an die Laufwege der Schadnager gebunden sein. Daher ist vorgesehen, dass vorzugsweise die Falle 1 auf den Flucht- und Laufwegen der Schadnager installiert wird. Hierbei ist auch denkbar, dass die Falle 1 in bestehende Hohlraumkonstruktionen eingebunden wird. Durch die erfindungsgemäßen öffnungsfähigen Eintrittsöffnungen 3' kann die Falle entsprechend an vorliegende Hohlraumkonstruktionen leicht angepasst werden. Die Bekämpfungsmittel 5 können hierbei unproblematisch in die jeweilige Falle 1 eingebracht werden und sind jederzeit durch Öffnen der Deckelteile 18 zugänglich.

Eine dauerhafte Überwachung und eine damit verbundene Dokumentation wird vorzugsweise mit einem Fallensystem aus Hartkunststoff umgesetzt.

Wärmespeicherndes Styropor oder ähnliche andere Materialien sind besonders in kühler Umgebung für Schadnager hoch attraktiv.

Beispielsweise können Lagerstätten, Nebenräume, oder Entsorgungsbereiche mit Styroporbehältnissen als erfindungsgemäß ausgeführte Fallen 1 wirkungsvoll behandelt werden.

Das erfindungsgemäße Fallensystem kann wahlweise giftfrei eingesetzt werden. Bevorzugt werden hierbei beispielsweise Betriebe aus dem Bereich von Bioprodukten und zertifizierte Betriebe bei denen der Einsatz von Cumarinderivaten nicht erwünscht ist. Eigenkontrollen und Qualitätssicherung werden in Großbetrieben mit dem IFS-System in Verbindung gebracht. Auch hier ist der Einsatz von Chemikalien als Bekämpfungsmittel unerwünscht. Eine erfindungsgemäße Falle 1 kann an derartig vorbestimmte Rahmenbedingungen flexibel angepasst werden, so dass auch in solchen Betrieben eine sachgemäße Bekämpfung von Schadnagern erfolgen kann.

Bei dauerhafter Überwachung von HACCP-Systemen kann eine erfindungsgemäße Falle 1 als Monitorfalle eingesetzt und in Lagepläne integriert werden. Zu diesem Zweck kann die Beköderung im Bodenbereich der Falle 1 durch herkömmliche Wachsblöcke (Cumarinderivate) erfolgen. Hierfür kann ein geteilter rundförmiger Dachdeckel als Deckelteil 18 vorgesehen sein, welcher z.B. nur mit einem speziellen Schlüssel geöffnet werden kann. Die Köderform ist nicht festgelegt. Sie kann z.B. quaderförmig zum Darüberlaufen oder dachförmig zum Durchlaufen gestaltet sein, insbesondere um die Variationsmöglichkeit zu erhöhen. Für diese Zwecke können die Totschlagfallen 15 auf der Bodenplatte 6 beispielsweise eingeklippt aber nicht scharf gestellt werden. Beim ersten sichtbaren Auftauchen von Schadnagern kann die Falle 1 in erfindungsgemäß leichter Weise kontrolliert und die Totschlagfallen 15 bei geöffnetem Deckelteil 18 ohne weiteres scharf gestellt werden. Somit kann eine verkürzte Lebensdauer der Schadnager gegenüber der verwendeten Blutgerinnungshemmungsmittel erreicht werden. Selbstverständlich können an dieser Stelle auch herkömmliche Lockstoffe wie beispielsweise Schokolade, Erdnussbutter oder andere Leckerbissen platziert werden.

Die Betreuung weit entfernter Objekte ist in Notfällen kurzfristig auch von angelernten Personen einfach zu handhaben. Ein ausgebildeter Schädlingsbekämpfer kann in solchen Sonderfällen dann eine fachkundige Planung zur weiteren Bekämpfungsmaßnahme vornehmen.

Die Köderform kann beispielsweise rechteckig sein oder in einem halbrunden brückenähnlichen Dach konstruiert sein.

Vorzugsweise besteht die Außenhülle der Falle 1 aus einem schwarzen oder anders eingefärbten Material. In den gezeigten Ausführungsbeispielen ist auch der Innenraum des Rohrbehälters 2 geschwärzt.

Die Wanddicke des Rohrbehälters 2 beträgt ca. 1-2mm oder mehr. Das in den Ausführungsbeispielen verwendete Material ist extrem leicht aber auch robust, umweltfreundlich und langlebig. Die beschriebene Falle 1 kann im privaten als auch im gewerblichen Bereich eingesetzt werden.

Weiterhin wird vorgesehen, dass die Falle 1 mit einer zusätzlichen Information von außen her durch einen witterungsfesten Aufkleber komplettiert wird. Auf diesen wird auf einem farblich angepassten Hintergrund die Falle 1 und ihr Gebrauch sowie ihr kurz- oder langfristiger Nutzen erklärt.

Weitere Ausführungsbeispiele sind in den Figuren 5 bis 5c und 6 bis 6a zusehen.

Insbesondere zeigen die Figuren 5c und 6 Ausführungsbeispiele der Falle 1, die aus einzelnen Rohrbehältern 2a, 2b bestehen und über eine gemeinsame Gehrungsebene winklig aneinander gesetzt sind.

Auf diese Weise lässt sich die erfindungsgemäße Falle auch für Eckbereiche von Räumen verwenden, ohne auf die oben genannten Vorteile verzichten zu müssen.

Weiterhin zeigt insbesondere Fig.6 ein Ausführungsbeispiel, bei welchem der tunnelartige Rohrbehälter 2 aus lediglich einer einzigen Seitenwand 230 und dem Behälterdeckel 220 besteht.

Eine derartige Falle 1 ist unmittelbar an der Hauswand platziert, so dass die der Seitenwand 230 gegenüberliegende Seitenwand durch die Hauswand gebildet wird.

Es ist sicherlich nachvollziehbar, dass ein an der Hauswand entlang laufender Schadnager aufgrund des Kontaktes seiner Schnurrbarthaare mit der Wand beim Eintritt in eine derart konzipierte Falle 1 keinen, das Kontaktgefühl ändernden Widerstand feststellen wird und auf diese Weise ebenfalls zum Betreten der Falle 1 motiviert wird.

Diesem Zweck dienen allerdings auch die konisch zulaufenden Einlauftrichter 21, da diese für die in Kontakt mit der Wand befindlichen Schnurrbarthaare des Schadnagers eine kaum merkliche Widerstandsänderung darstellen dürften.

### Bezugszeichenliste

- 1: Falle
- 2: Rohrbehälter
- 2a: 1. Teilstück
- 2b: 2. Teilstück
- 3: Eintrittsöffnung
- 3': seitliche Eintrittsöffnung
- 4: Stirnseite
- 5: Bekämpfungsmittel
- 6: Bodenplatte
- 7: Zielposition
- 8: Schwächungslinie
- 9: Breite des Bekämpfungsmittel
- 10: Abstand der Seitenwände
- 11: Breite der Bodenplatte
- 12: Boden des Behälters
- 13: Trogartiger Aufsatz
- 14: Befestigungsvorrichtung
- 15: Totschlagfalle
- 16: Totschlagbügel
- 17: Spannbügel
- 18: Deckelteil
- 19: Abstand
- 20: Rampe
- 21: Samtbelag
- 22: Einlauftrichter
- 50: Trittbrett
- 100: Feder
- 200: Basisplatte des Rohrbehälters
- 210: Haltevorsprung
- 220: Behälterdecke
- 230: Seitenwand
- 240: Nocken
- 250: Dichtleiste
- 260: Dorn
- 270: Querleiste
- 280: Absperrvorrichtung
- 300: Scharnieranschluss

## Patentansprüche

1. Falle (1) zum Bekämpfen von Schadnagern, bestehend aus einem in Längsrichtung allseitig umschlossenen Rohrbehälter (2) mit wenigstens zwei an den beiden Enden des Rohrbehälters (2) vorgesehenen Eintrittsöffnungen (3), die angepasst sind an die jeweils zu bekämpfende Schadnagerart, wobei der Rohrbehälter (2) vorbereitet ist zur Aufnahme einer zwischen die Eintrittsöffnungen (3) einsetzbaren Bodenplatte (6), auf der mindestens zwei schadnagerspezifische Bekämpfungsmittel (5), von denen jeweils eines einer Eintrittsöffnung (3) zugeordnet ist, vorinstalliert sind, **dadurch gekennzeichnet, dass** an den Enden der Seitenwände des Rohrbehälters (2) zusätzlich zu den Eintrittsöffnungen (3) an den Stirnseiten (4) wahlweise öffnungsfähige Eintrittsöffnungen (3') vorgesehen sind und dass der Rohrbehälter (2) zumindest im Bereich der Bekämpfungsmittel (5) ein öffnungsfähiges Deckelteil (18) aufweist.

2. Falle (1) nach Anspruch 1, **dadurch gekennzeichnet, dass** auch die an den Stirnseiten (4) des Rohrbehälters (2) vorgesehenen Eintrittsöffnungen wahlweise öffnungsfähig sind.

3. Falle (1) nach einem der Ansprüche 1 oder 2, **dadurch gekennzeichnet, dass** die wahlweise öffnungsfähigen Eintrittsöffnungen (3, 3') durch Schwächungslinien (8) im Material der Behälterseiten gebildet werden.

4. Falle (1) nach einem der Ansprüche 1 bis 3, **dadurch gekennzeichnet, dass** die Außenfläche des Rohrbehälters (2) Klebestellen aufweist.

5. Falle (1) nach einem der Ansprüche 1 bis 4, **dadurch gekennzeichnet, dass** der Rohrbehälter (2) von einem einstückigen Tunnelrohr gebildet wird.

6. Falle (1) nach einem der Ansprüche 1 bis 5, **dadurch gekennzeichnet, dass** die Bodenplatte (6) aus Kunststoff besteht.

7. Falle (1) nach einem der Ansprüche 1 bis 6, **dadurch gekennzeichnet, dass** jeweils zwei Bekämpfungsmittel (5) gegenüberliegend angeordnet sind.

8. Falle (1) nach Anspruch 7, **dadurch gekennzeichnet, dass** sich zwischen den gegenüberliegend angeordneten Bekämpfungsmitteln (5) eine vorbestimmte Zielposition (7) des Schadnagers befindet.

9. Falle (1) nach Anspruch 8, **dadurch gekennzeichnet, dass** an der vorbestimmten Zielposition (7) des Schadnagers Fressköder vorgesehen sind.

10. Falle (1) nach einem der Ansprüche 1 bis 9, **dadurch gekennzeichnet, dass** die Bodenplatte (6) an ihrer Oberseite Befestigungsvorrichtungen (14) für die Bekämpfungsmittel (5) aufweist.

11. Falle (1) nach einem der Ansprüche 1 bis 10, **dadurch gekennzeichnet, dass** bei einer im Gebrauch befindlichen Falle (1) die Bodenplatte (6) gegenüber dem Erdboden hochgesetzt ist.

12. Falle (1) nach einem der Ansprüche 1 bis 11, **dadurch gekennzeichnet, dass** als Bekämpfungsmittel (5) Totschlagfallen (15) vorgesehen sind.

13. Falle (1) nach Anspruch 12, **dadurch gekennzeichnet, dass** die Totschlagfallen (15) einen Totschlagbügel (16) und einen separaten Spannbügel (17) aufweisen.

14. Falle (1) nach Anspruch 13, **dadurch gekennzeichnet, dass** der Totschlagbügel (17) bezüglich der Bodenplatte (6) im gespannten Zustand senkrecht steht und beim Entspannen in Richtung der Bodenplatte (6) ausschlägt.

15. Falle (1) nach einem der Ansprüche 12 bis 14, **dadurch gekennzeichnet, dass** zwischen dem senkrecht stehenden Totschlagbügel (16) und der Behälterdecke (220) ein Abstand (19) vorliegt, welcher so gewählt ist, dass der Totschlagbügel (16) und ggf. der Spannbügel (17) bezüglich der Behälterdecke (220) gerade eben berührungslos ausschlagen.
